# EUROPEAN PATENT APPLICATION

(11) **EP 4 080 905 A1**
(43) Date of publication of application: **26.10.2022**
(21) Application number: 22167989.7
(22) Date of filing: 12.04.2022
(51) Int. Cl.: H04R 1/10, H01H 9/02

(54) **CONTROLS FOR HEADSETS**

(30) Priority: 23.04.2021 GB 202105843
(71) Applicant: Clarke, James, Sturminster Newton DT10 1JH (GB)
(72) Inventor: Clarke, James, Sturminster Newton DT10 1JH (GB)
(74) Representative: Poskett, Oliver James

(57) **Abstract**

An inline controller for an audio headset is provided which is able to connect to a dock. A dock is also provided which is able to connect to an inline controller for an audio headset.

## Description

### Field of the Invention

The invention relates to controls for headsets, and particularly to inline controllers for headsets, and docks for inline controllers.

### Background of the Invention

Modern headsets including headphones or earphones are used in a wide array of different applications, ranging from listening to music recreationally to conducting calls commercially. As such the headsets may be connected to numerous different user devices, such as computers or mobile phones. In the context of telecommunications headsets for making and receiving calls, the headsets may be used as part of analogue telephone network calling, digital or softphone telephone systems, video calling, or a combination thereof. In such cases, the headsets typically include microphones and support a wide range of associated functionality. Accordingly, headset users require the ability to control the numerous different aspects of the functionality, and want to do so as easily and conveniently as possible.

A conventional solution to this is to include some core functionality on an inline control unit which is part of the wiring cable leading from the headset, typically the headphones, to the connector, typically a USB connector or jack plug. This inline control unit typically includes some core functionality that is intended to be operated manually by a user, such as volume control buttons. However, these inline control units suffer from a number of drawbacks.

Firstly, by virtue of their location on the wiring cable of the headset, in use inline control units typically hang somewhere between the headphones on the user's head and the communication system the connector is plugged into. For instance, the inline control unit may be somewhere in the air above the floor, near the user's chair, or on the user's clothing. Accordingly, one disadvantage is that users have to actively locate the inline control unit before they are able to use it. Further, as the user moves, the inline control unit also moves along with the wiring cables, making location more burdensome and risking entanglement with the user or surrounding items, such as a chair or desk.

Secondly, a further disadvantage is that the conventional inline control unit is unstable in operation, as it merely hangs on the wiring cable and lacks any further support. As such, users are required to operate the device with a minimum of a two finger grip operation to provide the required support and stability to manipulate the controls. Further, some users resort to using two hands to provide the required support and control. This is generally disadvantageous for all users, but is particularly disadvantageous for certain kinds of users such as the elderly or those with disabilities making two hand operation, fine motor skills, or the required manual strength difficult or impossible to achieve. Similarly, some users find the location of the inline control when resting and in operation to be inconvenient or uncomfortable, as it may impinge on their skin or clothing, and is particularly discomforting for female users.

Thirdly, the same headset may be used in a large number of different contexts and across a wide range of different applications. For instance, a single user may wish to use the same headset to make and receive calls through a number of different communication protocols. Even within a single communication protocol such as Voice over Internet Protocol (VoIP) a single user may wish to use a wide range of different applications, such as Microsoft Teams^{™}, Zoom^{™}, or Skype^{™} etc. Each of these different applications may have different functionalities which the user would like to be able to control manually. However, the inline control unit has a single set of controls which are fixed at the point of manufacture. As such the user is left only able to control, for instance, the volume when using these different applications and has no ability to manually control the additional application specific functionalities unique to each application. Further, the constraint of being limited to the original buttons and controls of the inline control unit at the point of manufacture is only exacerbated over time, as more and varied applications become available which the user would like to be able to control and interact with using their inline control unit. Hence there is a distinct lack of functionality in existing inline control units, which thereby quickly become redundant and have accordingly shortened useful lifespans.

Fourthly, an existing approach to adding functionality is for headset manufacturers to make certain product lines with dedicated controls for particular software applications, such as the Microsoft Teams^{™} Certified Devices program. These devices include dedicated buttons for interoperability with the specific software programs. However, a distinct disadvantage of this is that if a user desires this extra control functionality they are required to buy a new headset device for each specific application they want to control. Put another way, the user is limited to having to choose from the outset, at the point of purchase, which functionality and/or associated applications they will be able to control with the headset. This limitation then exists for the lifetime of the inline control unit. This is impractical, restricts the choice of functionality available to users, requires a single user to have multiple headsets for different applications, and accordingly incurs large expense. Further still, different users of such headsets will each have different preferred programs or applications they wish to use, and even a single user may change preference over time. Attempting to accommodate for these varying preferences is expensive, especially for a large user group such as a call centre.

### Statement of the Invention

Aspects of the invention are defined by the accompanying claims.

Advantageously, according to embodiments of the invention there is provided an inline controller for a headset system which addresses the above problems in the art, is easy and efficient to operate, has the ability to allow for the inclusion of additional control functionalities and accommodate different applications, and allows a single user or multiple different users to have their varying use preferences accommodated for in a cost effective manner.

Advantageously, according to embodiments of the invention the expensive elements of the headset and inline controller may be retained across multiple different users and applications, and may be interoperable with, but modularly separable from, other elements in a plug and play configuration. In this way, the expensive elements of the headset and inline controller need only be purchased once, whilst allowing a single user to add other functionality at a subsequent time by purchasing relatively inexpensive add-on elements, or allowing multiple different users to each have their varying preferences accommodated for in a cost effective manner.

Advantageously, according to embodiments of the invention there is provided an inline controller capable of being plugged into a docking station wherein the docking station man advantageously provide additional functionality and controls to supplement those of the inline controller. Advantageously, according to embodiments of the invention the inline controller allows users to avoid the disadvantages of state of the art inline controllers - such as for instance the tendency to move around on the wire, the lack of stability, the difficulty of location in use - whilst still maintaining the useful modularity of inline controllers.

Advantageously, according to embodiments of the invention there is provided a dock for use with an inline controller capable of being connected to the dock, wherein the inline controller includes core control functionality. The dock may be used by a user to anchor the inline controller to the dock to avoid the disadvantages of the tendency to move around on the wire, the lack of stability, the difficulty of location in use.

According to embodiments of the invention, a dock is provided for use with an inline controller capable of being connected to the dock, wherein the dock may be used by a user to anchor the inline controller to the dock - to avoid the disadvantages of the tendency to move around on the wire, the lack of stability, the difficulty of location in use - whilst simultaneously allowing for the dock to supplement the core control functionality of the inline controller with additional functionality.

Advantageously, inline controllers and docks according to embodiments of the invention provide additional cost saving and convenience advantages, as instead of having to buy a new headset with new inline controllers each time additional functionalities enter the market, the user can retain a single headset including inline controllers throughout its lifetime, and can supplement this over time with 'plug-and-play' docks which provide the additional functionalities.

Various embodiments and aspects of the invention are described without limitation below, with reference to the figures.

### Brief Description of the Drawings

There now follows, by way of example only, a detailed description of preferred embodiments of the invention, with reference to the figures identified below.
**Figures 1A** and **1B** show an inline control unit according to an embodiment of the invention from a front perspective and back perspective respectively;
**Figure 2** shows a dock according to an embodiment of the invention;
**Figures 3A** and **3B** show an inline control unit and dock according to an embodiment of the invention from a front perspective and back perspective respectively.

### Detailed Description of the Embodiments

In the following description, functionally similar parts carry the same reference numerals between figures. Embodiments of the invention are now described, by way of example only, with reference to the accompanying drawings.

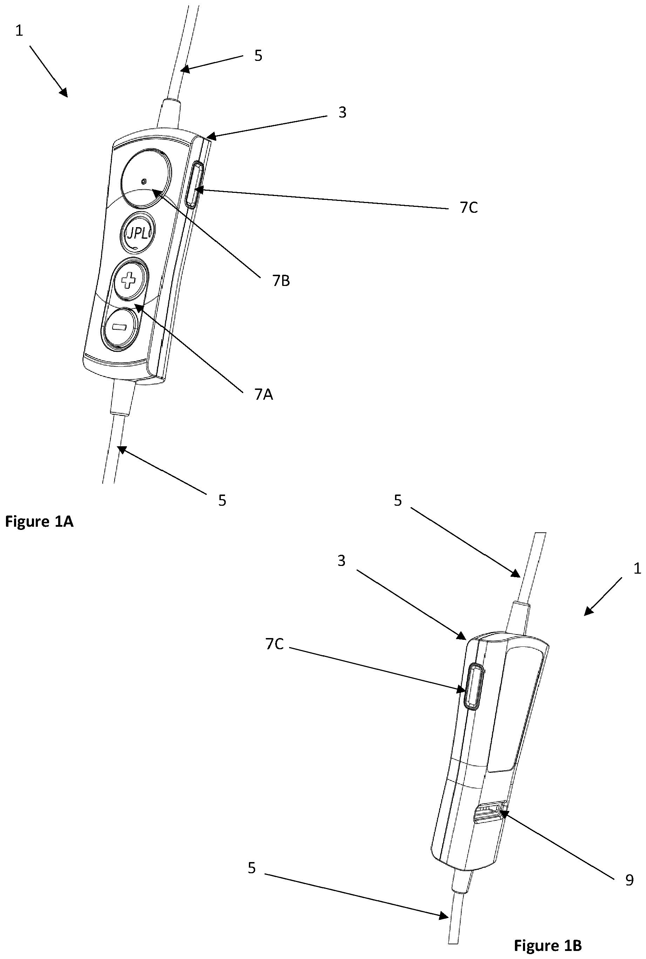

Referring to **Figures 1A** and **1B**, an inline control unit 1 of an embodiment of the invention includes a body 3, connecting cables 5 and controls 7. The inline control unit 1 is dimensioned so as to be operable by a user's hand, and may for instance take the shape shown in **Figures 1A** and **1B**, however the invention is not so limited and any appropriate shape is envisaged, with further specific embodiments concerning the shape being discussed below. The inline control unit 1 typically has two connecting cables 5 which are connected respectively to the audio device it controls, such as a bidirectional communication headset with headphones or earphones and a microphone, and to the user device which receives the audio data from the audio device and outputs audio data to the audio device. The locating of the inline control unit 1 between the user device and the audio device gives rise to the term of art 'inline'. The inline control unit 1 may be integrally and permanently connected with the audio device, such as a headset arrangement, by the cable 5. Alternatively the inline control unit 1 may be able to be connected to a variety of different audio devices, for instance by having the connecting cable 5 which leads from the inline control unit 1 to the audio device terminating in a connector for connecting to a plurality of different audio devices, such as a USB-C or any other suitable connector. The user device may for instance be a telephone, mobile phone or computing device, and may for instance be connected to a communications network such as an analogue telephone network, a digital or softphone telephony system, an internet video calling system, or a combination of thereof. Accordingly, the connecting cable 5 which leads from the inline control unit 1 to the user device may terminate in a connector for connecting to the user device, such as a USB or jack plug, or may be hardwired into the user device. However, embodiments of the invention are not limited to the specific means and type of connection to the user device or audio device. The audio device and the inline control unit 1 are typically powered by electrical power from the user device in operation. However, embodiments of the invention are not limited to any specific means of powering the inline control unit 1.

The inline control unit 1 is designed to control aspects of the audio device, the user device, or a combination thereof. For instance, as depicted in the figures, the inline control unit 1 may include controls 7 such as buttons 7A, 7B, and 7C for allowing user control of various different functionalities. For instance, controls 7A may be volume control buttons which control the audible level of sound output in the audio device, the control 7B may be a call answer/reject button for beginning or ending a bidirectional communication operation between the user device and the audio device, and the control 7C may be a mute button for muting an audio input function of the audio device such as a microphone. Alternatively, there may be an audio input device such as a microphone in the inline control unit 1 itself. The controls 7 may for instance be physical mechanical buttons, or may be touch sensitive. However, these are merely examples, and the number and type of controls 7, their location(s) and their functionalities are not limiting on embodiments of the invention. The inline control unit 1 may control functionality of the audio device, the user device, or a combination thereof, using any mechanism of control. For instance, the inline control unit 1 may include hardware and software which is capable of interoperable control of the user device and/or audio device. However, the invention is not limited to any specific mechanism of control.

In use, when the audio device and inline control unit 1 are connected to a user device, the user may manually interact with the controls 7 on the inline control unit 1 to control the associated functionality of any specific control 7 in question. For instance, the user may be made visually and/or audibly aware of an incoming call to the user device, for instance through a screen of the user device or through the audio device. The user may then for instance choose to accept the incoming call to the user device by pressing a control 7 on the inline control unit 1 such as a call answer/reject button 7B. Whilst on the call, the user may for instance further interact with other controls 7, such as volume controls 7A, to control other associated functionality of the user device and audio device.

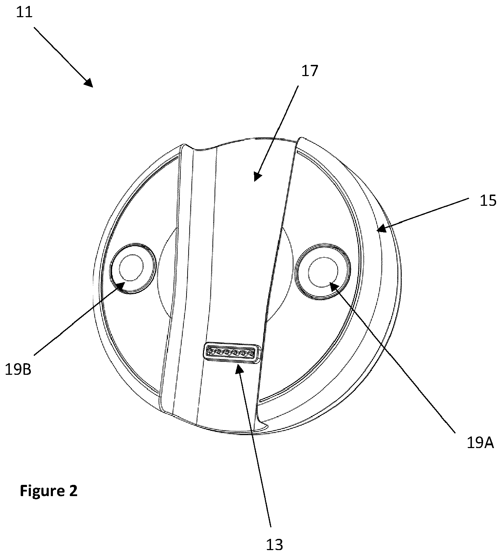

Advantageously, inline control units 1 according to an embodiment of the invention are configured to be removably connectable to a dock 11, an example of which is shown in **Figure 2****.** As such, inline control units 1 according to an embodiment of the invention further include at least one means for connection allowing the inline control unit 1 to be connected to a dock such as dock 11. For instance, the inline control unit 1 may be shaped and dimensioned such that it fits within a dock 11, and for instance is designed to be retained in the dock 11 by virtue of the physical shape and dimensionality of the inline control unit 1 fitting closely, resistance fitting or interference fitting within the dock 11. Additionally or alternatively, the material the inline control unit 1 is made from may be chosen to provide connection and retention properties. For instance the material may be chosen such that it is capable of surface interactions with the dock 11, such as being high resistance, rubberized, mildly adhesive, Velcro or any suitable material. In addition to each of the above, or as an alternative, the means for connecting the inline control unit 1 to the dock may be a magnet or magnetic material. In addition to each of the above, or as a further alternative, the inline control unit 1 may be capable of connecting to a dock 11 by any suitable mechanical connection, such as a clip, clamp, retainer, spring-loaded retention connection, a plug or a socket. Regardless of the specific manner of connection, or which combination of a plurality of different means for connection, as described above, inline control units 1 according to an embodiment of the invention are capable of being physically and reversibly connected to a dock 11. For each of the above described ways of connecting and combinations thereof, mutual aspects of a dock 11 exist where appropriate, as will be described further below.

Further, in addition to each of the above described manners of connecting the inline control unit 1 to a dock 11, or as an alternative, the means of connection of the inline control unit 1 may include a connector capable of allowing bidirectional digital communication between the dock 11 and the inline control unit 1. For instance, the connector may be an electrical, optical, magnetic or any other suitable connector.

According to embodiments of the invention, the connection between the inline control unit 1 and the dock 11 as provided by the means for connection, or the combination of the plurality of means for connection, as described above, is more than merely touching or physical contact between the inline control unit 1 and the dock 11. In particular, according to embodiments of the invention the means for connection provides at least some retention and/or resistance to separation once connected.

According to an embodiment of the invention, **Figures 1A** and **1B** depict a particular connection means 9, which is configured to allow the inline control unit 1 to be connected to the dock 11. The connection means 9 may for instance be located on a side of the device on which no controls 7 are located such that the controls 7 are still accessible to a user regardless of whether or not the inline control unit 1 is connected to a dock 11 by the connection means 9. For instance, as shown in **Figure 1B** the connection means 9 may be located on a back of the inline control unit 1. The connection means 9 may for instance be any of the magnet, magnetic material, mechanical connection or connectors described above, or any combination thereof. For instance, the connection means 9 may be the connector capable of allowing bidirectional digital communication between the dock 11 and the inline control unit 1, as described above and as will be described further below. Additionally the connector may include a mechanical connection, or a retention means such as a magnet or magnetic material. Alternatively, the connector may be a simple mechanical connection, or a retention means such as a magnet or magnetic material.

Further, **Figures 1A** and **1B** additionally depict a particular shape of the body 3 of the inline control unit 1, the shape of which may also be used as a means for connecting to the dock 11 in the manners previously described, and as will be described further below. However, the invention is not limited to any particular shape, and any appropriate shape is envisaged.

Advantageously, docks 11 according to an embodiment of the invention are configured to be removably connected to the inline control units 1 of the invention as previously described. In particular, docks 11 according to an embodiment of the invention further include at least one mutual means for connection allowing the dock 11 to be connected to the inline control unit 1 in combination with or via respective means of connection of the inline control unit 1. In particular, for each and any particular of the means of connection of the inline control unit 1, as described above, the dock 11 may include mutual means for connection. For instance, the mutual means of connection of the dock 11 may be complementary and interoperable with any of the shape, material, magnet, magnetic material, mechanical connection or connectors described above, or any combination thereof. Regardless of the specific manner of connection, or which combination of a plurality of mutual means for connection, as described above, docks 11 according to an embodiment of the invention are capable of being physically and reversibly connected to the inline control unit 1.

According to embodiments of the invention, the connection between the inline control unit 1 and the dock 11 as provided by the mutual means for connection, or the combination of the plurality of mutual means for connection, as described above, is more than merely touching or physical contact between the inline control unit 1 and the dock 11. In particular, according to embodiments of the invention the mutual means for connection provides at least some retention and/or resistance to separation once connected.

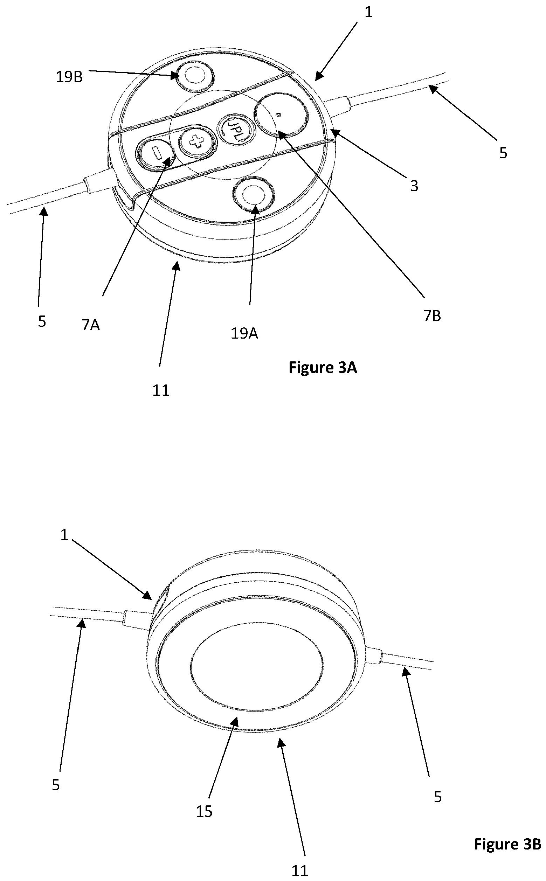

Referring to **Figure 2**, there is shown a dock 11 according to an embodiment of the invention. In particular, dock 11 includes a connection means 13 which mutually connects with connection means 9 on the inline control unit 1. Accordingly, the dock 11 of embodiments of the invention advantageously allows the inline control unit 1 to be removably connected to it, for instance as shown in **Figures 3A** and **3B**, and does so in a manner which allows the inline control unit 1 to continue to provide its control functionality in use, for instance whilst a user is on a phone call as described above. The dock 11 is movable by a user, but is designed and configured to remain in a single location the majority of the time, such as when in use with an inline control unit 1 connected to it. For instance, the dock 11 is intended to remain on or connected to a surface or object in use. Accordingly, the dock 11 advantageously acts as an anchor for the inline control unit 1, allowing a user to connect and disconnect the inline control unit 1 as desired, and without loss of control functionality. For instance, the dock 11 may be left by a user on a surface such as a desk, with the user able to removably attach the inline control unit 1 to the dock 11 before, during or after an active use session between the user device and the audio device. Advantageously, the dock 11 may be moved by the user to suit personal preference, for instance a user may prefer to locate the dock 11 on a different side of a desk depending on whether they are left or right handed, or a user's preferred dock 11 location may change over time. Alternatively, the dock 11 may be connected or attached to an object, such as a computer tower or computer screen casing.

Advantageously, with the inline control unit 1 and dock 11 according to an embodiment of the invention, users are able to connect the inline control unit 1 into the dock 11 in its known location such that subsequent locating of the inline control unit 1 in use is fast and simple. For instance, this is particularly beneficial whilst the user is conducting a telephone call with the connected user and audio devices and doesn't want to waste time and effort on the distraction of locating the inline control unit 1. Further, the connecting of the inline control unit 1 to the dock 11 advantageously ensures that the inline control unit 1 and associated cables 5 are not moving around in the user's environment in use, where they may become tangled with the user or surrounding objects and become dangerous or cause damage.

Further still, the modular and removable nature of the interconnection of the inline control unit 1 with the dock 11, for instance as shown in **Figure 3A** and **3B**, advantageously allows a user to connect or disconnect the inline control unit 1 to the dock as desired by use or preference. For instance, a user may wish to connect the inline control unit 1 into the dock 11 whilst sitting at a desk, but may wish to disconnect the inline control unit 1 from the dock 11 when wanting to stand up but retain the control functionality of the inline control unit 1. Alternatively, in a hot-desking or call centre environment each workstation may be supplied with its own dock 11, thereby allowing different users of the workstation to choose whether to connect the inline control unit 1 into the dock 11 or not, based on personal preference. Advantageously, inline control units 1 and docks 11 according to an embodiment of the invention thereby provide additional modular optionality between the current solutions of conventional inline control units incapable of docking, and headset systems connected only to a dock with no inline control unit.

Additionally, according to an embodiment of the invention the ability to locate the inline control unit 1 into a dock 11 such that the inline control unit 1 still provides its control functionality, for instance as shown in **Figure 3A** and **3B**, is particularly advantageous in providing support and stability to the inline control unit 1 which would otherwise be hanging on the cable wiring 5 in use, as is disadvantageously the case with conventional inline control units. In particular, the connecting of the inline control unit 1 into the dock 11 when located on a surface avoids the need for users to apply a two finger grip operation, or the use of two hands with one gripping and one operating the controls 7, and hence frees the user to simply use single finger operation of the controls 7. This advantageously requires fewer hands and fingers, reduced effort, reduced strength and reduced fine motor skills to operate, and is particularly beneficial for the elderly or those with disabilities. Further, the locating of the inline control unit 1 in the dock 11 removes the disadvantageous interaction of the inline control unit 1 with the user's clothing or person as it moves around on the cabling 5 in use.

Preferably, the dock 11 may include a means for resisting movement. For instance the dock 11 may be weighted to an extent which resists movement in use. For instance it may be weighted such that it resists most accidental movements by the user, but such that it may be intentionally moved by the user when desired. For example, the dock 11 may be weighted such that it resists a light tug on the cable 5 of the inline control unit 1 when it is connected to the dock 11, the force of which would otherwise have moved the dock 11. The amount of weighting can be any suitable amount such that the dock 11 generally resists movement in normal use conditions when the inline control unit 1 is connected but is still able to be moved by a user when desired. In particular, the weighting may be achieved by creating the dock 11 from a dense material, or may include inserting a weight within the body 15 of the dock 11. Alternatively, the means for resisting movements may take the form of a plastic suction cup, a clip, or for instance a reusable adhesive material of any suitable form, both of which would for instance be located on the under side of the dock 11 as shown in **Figure 3B** for connection to a surface such as a desk or an object such as a computer tower or computer screen casing. Advantageously, the means for resisting movement provides further stability, ease of use and safety benefits in maintaining the dock 11 in a chosen user location and hence enhancing further the previously described advantages.

As shown in **Figure 2**, the dock has a body 15 which may be of a substantially cylindrical shape. As mentioned above, the dock 11 is intended to remain substantially in a single location when in use, for instance to rest upon a desk. For example, the dock 11 may have a shape such that it sits or rests upon a desk, such as the cylindrical shape depicted in **Figures 2**, **3A**, and **3B****.** However, the dock 11 may also be in other shapes and dimensions, and the invention is not limited in this regard. In embodiments in which the means for connecting the inline control unit 1 to the dock 11 includes aspects of the shape and dimensionality of the inline control unit 1, the dock 11 may be accordingly dimensioned so as to receive the inline control unit 1 into a mutually shaped receiving area 17, for instance in the form of a groove or cut out, into which the inline control unit 1 can be located when connected to the dock 11. For instance, the receiving area 17 may be dimensioned such that the inline control unit 1 forms a substantially seamless part of the dock 11 once connected thereto, for instance as depicted in **Figures 3A** and **3B****.** Advantageously, the receiving area 17 allows for secure locating and removable retention of the inline control unit 1 in the dock 11, thereby facilitating fast locating and improved ease of access for the user, and also reducing the likelihood of damage in use as the combined inline control unit 1 and dock 11 form a single integrated whole less susceptible to being damaged. For instance, in configurations in which the inline control unit 1 stands proud from the dock 11, the inline control unit 1 would be individually exposed and may be accidentally knocked by a user in a manner that would cause mechanical stress on the pivot point of the connection means 9 and 13, potentially leading to breakage. Hence the top surfaces of the dock 11 and inline control unit 1 are flush when connected, or the inline control unit 1 may be recessed within the dock 11 when connected. Further, the receiving area 17 may advantageously guide the inline control unit 1 into the dock 11 such that the connection means 9 and 13 may correctly align, thereby further reducing the likelihood of the user damaging the connection means 9, 13 through incorrect alignment. Advantageously, the receiving area 17 provides further stability and structural integrity to the combined inline control unit 1 and dock 11 in use, hence enhancing further the previously described associated advantages.

Preferably, the dock 11 may additionally include controls 19, such as buttons 19A and 19B, for allowing user control of various different functionalities of the audio device, the user device, or a combination thereof, for instance when connected to the inline control unit 1 and in a similar manner to the inline control unit 1 as described above. The dock 11 may control functionality of the audio device, the user device, or a combination thereof, using any mechanism of control. For instance, the dock 11 may include hardware and software capable of interoperable control of the user device and/or audio device. However, the invention is not limited to any specific mechanism of control used by the dock 11. The controls 19 may for instance be physical mechanical buttons, or may be touch sensitive. However, these are merely examples, and the number and type of controls 19, their location(s) and their functionalities are not limiting on embodiments of the invention. Advantageously, the controls 10 on the dock may be provided as 'fast key' buttons, which travel easily with little pressure applied but which still maintain a positive tactile feel, in a similar manner to keyboard keys. This provides the user with a fast, easy and known button functionality and facilitates successful user interaction with the controls 19.

The control signals generated by user interaction with the controls 19 may be transmitted and communicated to the audio and/or user device directly by means of a direct connection between the dock 11 and the user device and/or audio device, such as any suitable wired or wireless connection, such as Bluetooth^{™}. Alternatively, the control signals generated by user interaction with the control 19 may be conveyed to the user device and/or audio device through the inline control unit 1. For instance, in addition to each of the above described manners of connecting the inline control unit 1 to the dock 11, or as an alternative, when the inline control unit 1 has a connector capable of allowing bidirectional digital communication between the dock 11 and the inline control unit 1, the dock 11 may include a mutual connector capable of allowing bidirectional digital communication for connection thereto. For instance, the mutual connector may be an electrical, optical, magnetic or any other suitable connector, as determined by interoperable compatibility with the connector of the inline control unit 1. Regardless of the specific manner of transmission, the dock 11 may therefore include the required internal hardware and software to support this functionality.

Hence, according to an embodiment of the invention as depicted in **Figure 2**, the control signals generated by user interaction with the control 19 may be conveyed to the user device and/or audio device through the inline control unit 1 by the dock outputting appropriate control signals through the connection means 13. When connected to the inline control unit 1, the dock 11 may draw electrical power from the user device through the inline control unit 1 by means of the connection means 9 and 13.

Accordingly, docks 11 according to an embodiment of the invention are advantageously capable of modularly supplementing the control functionality of the inline control unit 1 with additional control functionality for the user device and/or audio device. Hence, docks 11 according to an embodiment of the invention advantageously provide additional control functionalities to the inline control unit 1 in a convenient plug and play format.

The controls 19 may provide at least one different and additional control functionality to those found on the inline control unit 1. For instance, the dock 11 may include control buttons 19A and 19B. The control buttons 19A and 19B may be user programmable, for instance it may be possible for a user to assign a control functionality to these buttons using software on, for instance, the user device. Alternatively, at least one of the control buttons such as 19A may have a specific predetermined functionality. According to an embodiment, a control 19A may be specifically designed to launch a particular softphone application, such as for instance Microsoft Teams^{™}, Zoom^{™}, or Skype^{™} etc. on the user device. Accordingly, the dock 11 may be manufactured and sold with this or any other specific control functionality assigned to one of the controls such as 19A, and may therefore include the required internal hardware and software to support this functionality. Accordingly, a range of docks 11 may be manufactured and sold separately, each providing specific control functionality associated with for instance the particular user device application or particular control functionality.

As such, docks 11 according to an embodiment of the present invention advantageously provide a cost effective manner for a user to update and supplement their control functionality over time. In particular, a user can purchase a single inline control unit 1, either as part of a headset or separately, with its predetermined range of controls 7 and will then only need to purchase new docks 11 when new applications or control functionalities are provided in the marketplace, and new docks 11 are accordingly created to accommodate these control functionalities. In this way the user is provided with a cost effective way of future proofing the purchase and use of their single inline control unit 1, as instead of needing to replace the inline control unit each time a new control functionality is desired or new application is released, the user can simply buy a supplementary dock 11 accordingly.

In use, when the inline control unit 1 is connected to the dock 11, the user may manually interact with the controls 7 on the inline control unit 1 in the same manner as previously described. Indeed, as previously described, the dock 11 of an embodiment of the present invention advantageously allows for the control functionality of the inline control unit 1 to be used even when the inline control unit 1 is connected to the dock 11. Further advantageously, the user may also manually interact with the additional controls 19 of the dock 11 to control the additional associated functionality of any specific control 19 in question. Hence, as well as the previously described advantages, the dock 11 according to an embodiment of the invention advantageously supplements the range of control functionality of the inline control unit 1 with the further additional control functionality found on the dock 11.

For instance, when the dock 11 includes application specific control functionality, such as a control 19A which launches a particular application on the user device such as Microsoft Teams^{™}, Zoom^{™}, or Skype^{™} etc., a user may simply arrive at a work station, connect their inline control unit 1 to the dock 11, and press the control 19A to quickly and efficiently launch the desired specific application on the user device. The user may then conduct a call through the specific application, and may for instance adjust the volume of the call using the controls 7A located on the inline control unit 1 located in the dock 11. Hence the user is provided with an advantageously large range of control functionality centered in the single easy to access location of the combined inline control unit 1 and dock 11.

Inline control units 1 and docks 11 according to an embodiment of the invention are particularly advantageous in the call centre or hot-desking context, and particularly in instances in which the dock 11 is manufactured and sold with application specific control functionality assigned to one of the controls such as 19A, such as for use with Microsoft Teams^{™}, Zoom^{™}, or Skype^{™} etc., and a range of docks 11 are manufactured each providing specific control functionality associated with the particular user device application. Here each user may arrive at a particular workstation bringing with them their own dock 11 of preference, and hence may modularly supplement the inline control unit 1 of the particular workstation with the additional plug and play functionality of their own dock 11 providing specific application control functionality. Hence the inline control unit 1 and dock 11 according to an embodiment of the invention is particularly advantageous in flexibly accommodating a range of user specific control preferences in a cost effective manner, in particular as the requirement to purchase an entirely new headset and inline control unit for each different control functionality and/or application is avoided.

In combination with the at least one additional and different control functionality provided by the dock 11, if a control 7 of the inline control unit 1 is obscured when connected to the dock 11 - such as control 7C of the embodiment depicted in **Figures 1A** and **1B** would be when located in the dock 11 of the embodiment depicted in **Figure 2** and **Figures 3A** **and 3B** - then one of the controls 19 may provide this same control functionality as the obscured control 7 so that the user is not deprived of this control functionality when the inline control unit 1 and dock 11 are connected. For instance, control 7C on the inline control unit 1 may have the same functionality as control 19B on the dock 11, such as a mute control.

Accordingly, an embodiment of the invention advantageously provides an inline control unit 1 for use with an audio device connected to a user device, and capable of being connected to a dock 11, for instance located on a desk. Accordingly, an embodiment of the invention advantageously allows users to overcome the disadvantages of the conventional inline control units - which for instance move around with the cable wiring, are unstable in operation, difficult for users to locate, and require two hand grip operations - whilst maintaining the useful modularity of inline controls.

Further, an embodiment of the invention may additionally provide for the dock 11 to supplement the control functionality of the inline control unit 1 with additional different control functionality, such as in embodiments in which the dock 11 includes application specific controls for launching and/or controlling a particular application on the user device. Accordingly, an embodiment of the invention advantageously allows a user to retain a single headset with an inline control unit 1 that includes the core universal functionality (e.g. volume control, call answering), which the user can choose to anchor to the dock 11 to avoid the above disadvantages, whilst simultaneously harnessing the dock 11 to supplement the core control functionality of the inline control unit 1 with additional functionality, such as dedicated application launching control buttons for applications on the user device. Hence an embodiment of the invention provides additional cost saving and convenience advantages, as instead of having to buy a new headset with new inline controls each time additional functionalities enter the market, a user can retain a single headset including the inline control unit 1 throughout its lifetime and can supplement this over time with 'plug-and-play' docks 11 which provide additional specific functionalities.

### Alternative Embodiments

The embodiments described above are illustrative of, rather than limiting to, the invention. Alternative embodiments apparent on reading the above description may nevertheless fall within the scope of the invention.

## Claims

1. An inline controller for an audio headset, comprising:
a first cable for connection to the headset and a second cable for connection to a user device; and
control means actuable by a user to control at least one functionality of the user device and/or headset;
wherein the inline controller further comprises means for connection for physically and removably connecting the inline controller to a dock.

2. The inline controller of claim 1, wherein the means for connection comprises the shape of the inline controller.

3. The inline controller of any one of claims 1 to 2, wherein the means for connection comprises the external material of the inline controller.

4. The inline controller of any one of claims 1 to 3, wherein the means for connection comprises a magnet or a magnetic material.

5. The inline controller of any one of claims 1 to 4, wherein the means for connection comprises a mechanical connector.

6. The inline controller of any one of claims 1 to 5, wherein the means for connection comprises a connector for allowing data communication between the dock and the inline controller.

7. A dock for an inline controller of an audio headset, comprising:
mutual means for connection for physically and removably connecting to the means for connection of the inline controller of any preceding claim.

8. The dock of claim 7, wherein the dock further comprises a means for resisting movement such that the dock substantially resists unintentional movement by a user.

9. The dock of claim 8, wherein the means for resisting movement comprises weighting.

10. The dock of any one of claims 7 to 9 when dependent on claim 2, further comprising a receiving area for receiving and retaining the inline controller, wherein the receiving area is mutually dimensioned with respect to the shape of the inline controller such that the inline controller fits closely within the receiving area.

11. The dock of any one of claims 7 to 10, further comprising additional control means actuable by a user to control at least one additional functionality of the user device and/or headset.

12. The dock of claim 11 when dependent on claim 6, wherein the mutual means for connection comprises a mutual connector for allowing data communication between the dock and the inline controller via the connector of the inline controller, and configured to allow the additional control means to control the at least one additional functionally of the user device and/or headset thereby.

13. The dock of claim 11 when dependent on any one of claims 1 to 5, wherein the dock further comprises data communication means for directly communicating with the user device and/or headset, and configured to allow the additional control means to control the at least one additional functionally of the user device and/or headset thereby.

14. The dock of any one of claims 11 to 13, wherein the at least one additional functionality relates to control of an application on the user device.

15. The dock of claim 14, wherein the at least one additional functionality is launching a software application on the user device.
